(19) Europäisches Patentamt
European Patent Office
Office européen des brevets

(11) **EP 3 457 509 A1**

(12) **EUROPEAN PATENT APPLICATION**

(43) Date of publication:
**20.03.2019 Bulletin 2019/12**

(51) Int Cl.:
**H02H 3/08** *(2006.01)* **F25B 13/00** *(2006.01)*
**F25B 49/02** *(2006.01)* **H02H 5/04** *(2006.01)*
**H02H 7/22** *(2006.01)*

(21) Application number: **18194639.3**

(22) Date of filing: **14.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2017 JP 2017176635**

(71) Applicant: **MITSUBISHI HEAVY INDUSTRIES THERMAL SYSTEMS, LTD.**
**Minato-ku**
**Tokyo 108-8215 (JP)**

(72) Inventors:
• **SUNOHARA, Tetsu**
**TOKYO, 108-8215 (JP)**
• **SHIMIZU, Kenji**
**TOKYO, 108-8215 (JP)**
• **TAKADA, Junichi**
**TOKYO, 108-8215 (JP)**
• **IIO, Tsuyoshi**
**TOKYO, 108-8215 (JP)**

(74) Representative: **Cabinet Beau de Loménie**
**158, rue de l'Université**
**75340 Paris Cedex 07 (FR)**

(54) **CURRENT CONTROLLER, AND ELECTRICAL APPARATUS**

(57) There is provided a current controller enables an excess current to be prevented from flowing through a target harness without adding, to an electrical circuit, a transistor that is an element complicating the circuit. The present invention relates to a current controller that controls a current to be supplied to a harness (H) configuring an electrical apparatus, and the current controller includes a measurement section (21, 23) configured to measure electrical characteristics of the harness (H) that are varied according to a supplied current, and a control section (40) configured to estimate a surface temperature of a conductor of the harness (H) based on the electrical characteristics measured by the measurement section, and to compare the estimated surface temperature with a predetermined threshold. The control section (40) is configured to suppress the current to be supplied to the harness (H) based on a result of the comparison between the surface temperature and the threshold.

FIG. 1A

**Description**

BACKGROUND OF THE INVENTION

Field of the Invention

The present invention relates to a technology to control a current of an inverter device that controls power to be supplied to a motor compressor configuring, for example, an air conditioning unit.

Description of the Related Art

For example, in an air conditioning unit for business use, a diameter of an electrical wire of a wire harness (hereinafter, harness) used in an electrical circuit of an outdoor unit is selected based on a magnitude of a current flowing therethrough. If the diameter of the electrical wire is excessively made small, a current exceeding an allowable current flows. This may deteriorate the harness to cause function loss or may cause an abnormal temperature increase of the harness.

The current flowing through the harness, however, depends on operating capability of the outdoor unit. Further, a resistance value of the electrical wire configuring the harness is varied according to the temperature of the electrical wire. Therefore, the current allowed for the harness is varied according to an ambient temperature of the harness. Accordingly, to select the diameter of the harness, it is necessary to set the allowable current including a margin in consideration of an operation state and the ambient temperature. As a result, a weight of the harness for the entire electrical component is increased and arrangement of wiring is obstructed, which deteriorates manufacturability and maintainability.

As a method of limiting the current flowing through the harness, a method disclosed in WO2014/184878 is well-known. In the method disclosed in WO2014/184878, a transistor is connected in series to the harness, and when the current flowing through the harness becomes equal to or larger than a set current, resistance of the transistor is increased to limit the current.

In the method disclosed in WO2014/184878, it is necessary to add a current limiting transistor to the electrical circuit including the harness, which may complicate the circuit and increase its cost.

Accordingly, an object of the present invention is to provide a current controller that enables an excess current to be prevented from flowing through a target harness without adding, to an electrical circuit, a transistor that is an element complicating the circuit.

SUMMARY OF THE INVENTION

A current controller according to the present invention controls a current to be supplied to a wire harness configuring an electrical apparatus, and the current controller includes a measurement section configured to measure electrical characteristics of the wire harness that are varied according to a supplied current, and a control section configured to suppress the current to be supplied to the wire harness, based on the electrical characteristics measured by the measurement section.

The control section according to the present invention can be configured to estimate a surface temperature Ta of a conductor of the wire harness based on a current value I of the wire harness and a potential difference Vab across the wire harness that are measured by the measurement section, compare the estimated surface temperature Ta with a predetermined threshold Ts for temperature, and suppress the current to be supplied to the wire harness based on a result of the comparison between the surface temperature Ta and the threshold Ts.

The control section includes, as the threshold Ts, a limit value T1 and an allowable value T2 that is temperature higher than the limit value T1. The control section can be configured to compare the estimated surface temperature Ta with the limit value T1 to determine whether to suppress the current to be supplied to the wire harness, and compare the estimated surface temperature Ta with the allowable value T2 to determine whether to stop the supply of the current to the wire harness.

The control section can be configured to suppress the current to be supplied to the wire harness when the estimated surface temperature Ta is a value between the limit value T1 and the allowable value T2.

In addition, the control section can be configured to specify a suppression degree of the current to be supplied to the wire harness based on a degree of the estimated surface temperature Ta.

The control section according to another mode of the present invention can be configured to compare the potential difference Vab across the wire harness measured by the measurement section with a predetermined threshold Vs for potential difference, and suppress the current to be supplied to the wire harness based on a result of the comparison between the potential difference Vab and the threshold Vs.

In the current controller according to the present invention, the control section may be configured to restore the suppressed current to be supplied to the wire harness when a predetermined condition is satisfied.

The control section may be configured to restore the current in a manner following history of hysteresis after suppressing the current to be supplied to the wire harness.

The present invention relates to an electrical apparatus that includes an inverter device including a wire harness as an element and configured to be supplied with AC power from a power supply, a load configured to be operated by power generated by the inverter device, a measurement section configured to measure electrical characteristics of the wire harness that are varied according to a supplied current, and a control section configured to control operating capability of the load.

The control section in the electrical apparatus according to the present invention is configured to suppress the operating capability of the load based on the electrical characteristics measured by the measurement section, to suppress the current to be supplied to the wire harness.

In a case where the electrical apparatus according to the present invention is an air conditioning unit, the load is a motor compressor.

According to the present invention, the electrical characteristics of the wire harness that are varied according to the supplied current are measured, and the current to be supplied to the wire harness is suppressed based on a result of the comparison between the surface temperature Ta of the conductor of the wire harness that is estimated based on the electrical characteristics measured by the measurement section, and the threshold. Since the electrical characteristics can be measured by meters such as an ammeter and a voltmeter, an excess current can be suppressed from flowing through the harness without adding, to the electrical circuit including the wire harness, a transistor that is an element complicating the electrical circuit.

BRIEF DESCRIPTION OF THE DRAWINGS

FIGS. 1A and 1B each illustrate a schematic configuration of an air conditioner according to an embodiment of the present invention, FIG. 1A being a diagram illustrating the whole of the air conditioner, and FIG. 1B being a diagram illustrating an inverter device;

FIGS. 2A and 2B each illustrate operation of the air conditioner in FIGS. 1A and 1B, FIG. 2A illustrating cooling operation, and FIG. 2B illustrating heating operation;

FIG. 3A is a diagram illustrating a state where a current value and a potential difference are measured in the embodiment, and FIG. 3B is a diagram illustrating a state where the potential difference is measured in the embodiment;

FIG. 4 is a flowchart illustrating a procedure to control operating capability in the embodiment;

FIGS. 5A and 5B are diagrams illustrating an operating capability map in the embodiment; and

FIG. 6 is a diagram illustrating state transition of a control level in the operating capability map in the embodiment.

DETAILED DESCRIPTION OF THE PREFERRED EMBODIMENTS

An air conditioning unit 1 according to an embodiment of the present invention is described below with reference to accompanying drawings. The air conditioning unit 1 as an example of an electrical apparatus compares estimated temperature of a wire harness included in an outdoor unit 10 and a predetermined threshold Ts for temperature, and lower operating capability of the air conditioning unit 1, in particular, operating capability of a motor compressor 15, thereby inhibiting an excess current from flowing through the wire harness.

[Configuration of Air Conditioning Unit 1]

An inverter device 11 controls operation of the motor compressor 15 to allow the air conditioning unit 1 to support cooling operation or heating operation required by a user.

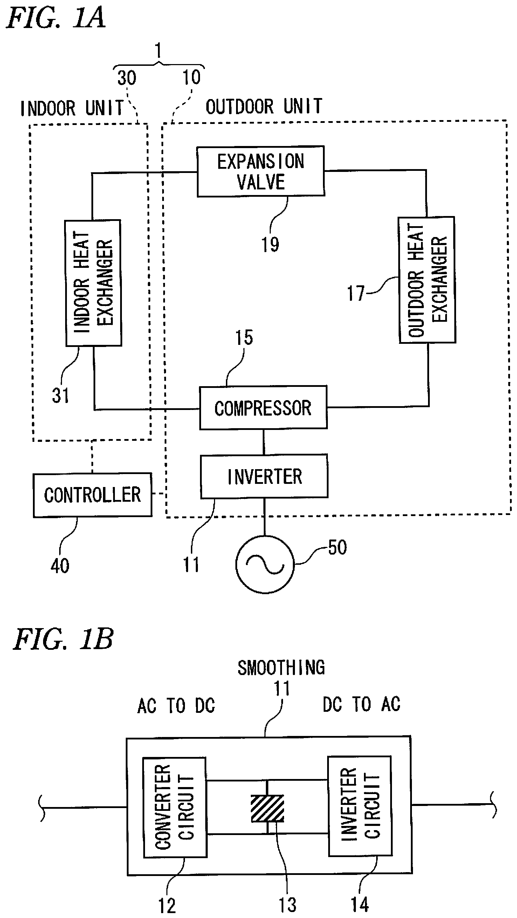

As illustrated in FIG. 1A, the air conditioning unit 1 includes the outdoor unit 10 and an indoor unit 30. A circuit through which a refrigerant flows is configured by the motor compressor 15, an outdoor heat exchanger 17, and an expansion valve 19 that are included in the outdoor unit 10, and an indoor heat exchanger 31 included in the indoor unit 30. The air conditioning unit 1 includes a controller 40 that controls the operation of the air conditioning unit 1, and control of suppression of a current according to the present embodiment described later is executed in response to an instruction by the controller 40.

Although not illustrated in FIG. 1A, the air conditioning unit 1 includes other elements normally provided in the air conditioning unit 1, for example, a valve and piping to switch between the cooling operation and the heating operation, and blowers provided along with each of the outdoor heat exchanger 17 and the indoor heat exchanger 31. In the following, suppression of the current that is a feature of the present embodiment is described after the configuration of the air conditioning unit 1 is described.

[Configuration of Outdoor Unit 10]

As illustrated in FIGS. 1A and 1B, the outdoor unit 10 includes the inverter device 11, and the motor compressor 15 that is operated according to power supplied from the inverter device 11. The inverter device 11 is a main element to drive the motor compressor 15 at a variable speed.

As illustrated in FIG. 1B, the inverter device 11 includes a converter circuit 12, a capacitor 13, and an inverter circuit 14.

The converter circuit 12 converts AC power supplied from an AC power supply 50 into DC power, and supplies the DC power to the capacitor 13. The converter circuit 12 includes, for example, a diode bridge rectifier.

The capacitor 13 smooths a DC voltage supplied from the converter circuit 12, to generate a DC voltage having a small fluctuation.

The inverter circuit 14 includes, for example, a Pulse Width Modulation (PWM) circuit, and converts the DC voltage smoothed by the capacitor 13 into an AC voltage, and supplies the AC voltage to the motor compressor 15. In the inverter circuit 14, multiple semiconductor switching elements are connected in parallel to one another. The inverter circuit 14 controls ON/OFF of these semiconductor switching elements to optionally set a frequency of the AC voltage and the voltage when converting the DC voltage into the AC voltage.

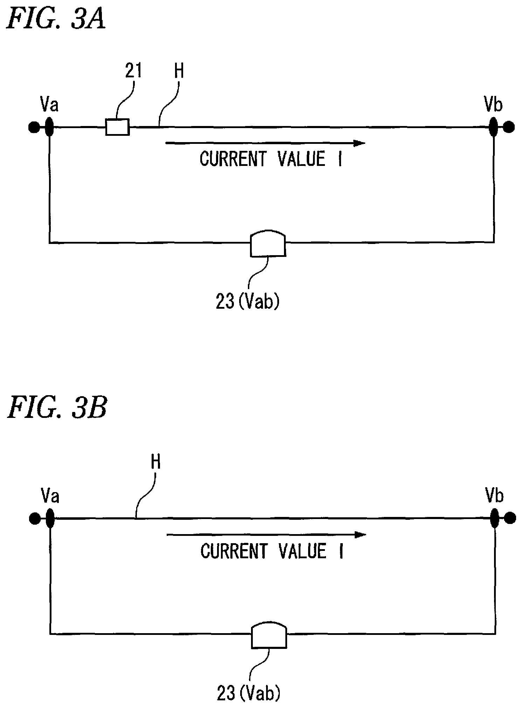

The inverter device 11 includes the wire harness that electrically connects the converter circuit 12, the capacitor 13, and the inverter circuit 14. A temperature of the harness is estimated, and a current flowing through a wire harness H (hereinafter, harness H) is accordingly controlled so as not to exceed an allowable value, as illustrated in FIGS. 3A and 3B. Therefore, the inverter device 11 includes an ammeter 21 that measures a current value I of the current flowing through the target harness H, and a voltmeter 23 that measures a potential difference Vab across the harness H.

Although not illustrated, the motor compressor 15 includes an electrical motor that is driven by the AC power supplied from the inverter device 11, and a compression mechanism that is driven by the electrical motor to compress a refrigerant.

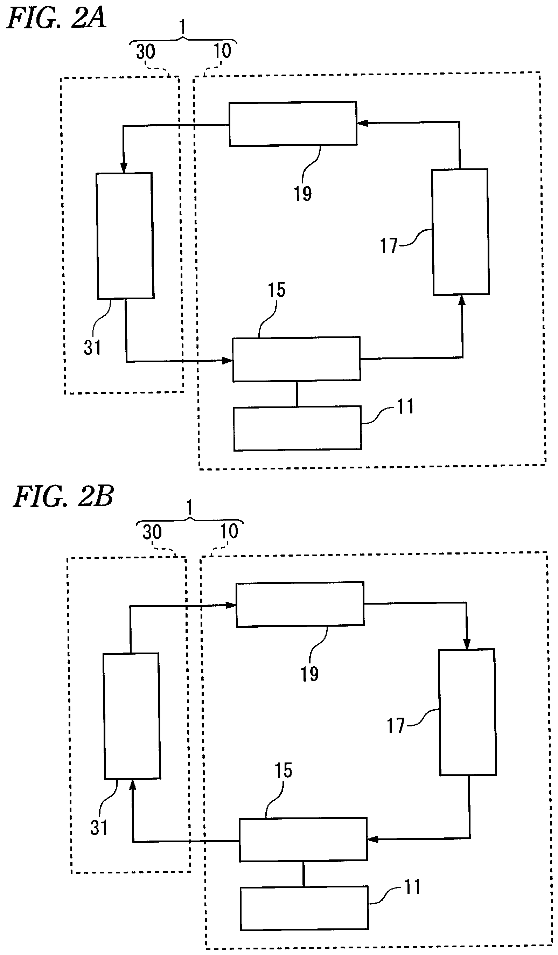

During the cooling operation, the motor compressor 15 compresses the refrigerant supplied from the outdoor unit 10, and supplies the high-temperature and high-pressure refrigerant to the outdoor heat exchanger 17 (FIG. 2A). During the heating operation, the motor compressor 15 compresses the refrigerant supplied from the outdoor heat exchanger 17, and supplies the high-temperature and high-pressure refrigerant to the indoor heat exchanger 31 of the indoor unit 30 (FIG. 2B).

As illustrated in FIG. 1A, the outdoor heat exchanger 17 is provided between the inverter device 11 and the expansion valve 19. During the cooling operation by the air conditioning unit 1, the outdoor heat exchanger 17 condenses the high-temperature and high-pressure gaseous refrigerant supplied from the motor compressor 15, to feed the condensed refrigerant to the expansion valve 19. In the condensation, the refrigerant dissipates heat to outside air. Further, during the heating operation by the air conditioning unit 1, the outdoor heat exchanger 17 evaporates the liquid refrigerant supplied from the expansion valve 19, and then feeds the evaporated refrigerant to the motor compressor 15. In the evaporation, the refrigerant takes away heat from the outside air.

As illustrated in FIG. 1A, the expansion valve 19 is provided between the outdoor heat exchanger 17 and the indoor heat exchanger 31 of the indoor unit 30. During the cooling operation by the air conditioning unit 1, the expansion valve 19 liquefies the refrigerant that passes therethrough and that has been condensed by the outdoor heat exchanger 17. Further, during the heating operation by the air conditioning unit 1, the expansion valve 19 liquefies the refrigerant that passes therethrough and that has been condensed by the indoor heat exchanger 31 of the indoor unit 30.

[Configuration of Indoor Unit 30]

As illustrated in FIG. 1A, the indoor unit 30 includes the indoor heat exchanger 31. The indoor heat exchanger 31 is provided between the motor compressor 15 and the expansion valve 19.

During the cooling operation, in the indoor heat exchanger 31, the refrigerant liquefied by the expansion valve 19 is evaporated and takes away heat from the air. As a result, cold air is supplied to a room. Further, during the heating operation, in the indoor heat exchanger 31, the high-temperature and high-pressure refrigerant made by the motor compressor 15 is condensed and gives heat to the air. As a result, warm air is supplied to the room.

[Operation of Air Conditioning Unit 1]

Next, the cooling operation and the heating operation of the air conditioning unit 1 are described in this order with reference to FIGS. 2A and 2B. Note that illustration of the controller 40 and the AC power supply 50 is omitted in FIGS. 2A and 2B. Further, in FIGS. 2A and 2B, arrows each indicate a flowing direction of the refrigerant.

[Cooling Operation (FIG. 2A)]

In the cooling operation, the refrigerant is supplied in a liquid state from the outdoor unit 10 to the indoor unit 30. The refrigerant is evaporated in the indoor heat exchanger 31 of the indoor unit 30 to cool the indoor heat exchanger 31. When wind is blown to the indoor heat exchanger 31 by the unillustrated blower of the indoor unit 30, cold air in which heat is taken away by the indoor heat exchanger 31 is blown off toward the room.

The refrigerant evaporated and gasified in the indoor heat exchanger 31 returns to the outdoor unit 10. After the refrigerant is compressed to the high-temperature and high-pressure refrigerant by the motor compressor 15 of the outdoor unit 10, the high-temperature and high-pressure refrigerant is condensed by the outdoor heat exchanger 17 and dissipates heat to the outside air. The refrigerant is liquefied when passing through the expansion valve 19 of the outdoor unit 10.

In the cooling operation, the above-described refrigerant circulation cycle is repeated to maintain desired temperature of the room in which the indoor unit 30 is placed.

[Heating Operation (FIG. 2B)]

Heat energy of the outside air is drawn to the refrigerant by the outdoor heat exchanger 17 of the outdoor unit 10. The refrigerant is compressed to the high-temperature and high-pressure refrigerant by the motor compressor 15 of the outdoor unit 10, and the high-temperature and high-pressure refrigerant is supplied to the indoor unit 30. The refrigerant supplied to the indoor unit 30 is condensed by the indoor heat exchanger 31 and dissipates heat. When wind is blown to the indoor heat exchanger 31 by the unillustrated blower of the indoor unit 30, warm air that has received heat from the indoor heat exchanger 31 is blown off toward the room.

The refrigerant dissipating heat in the room returns to the outdoor unit 10, and is liquefied when passing through the expansion valve 19 of the outdoor unit 10. The refrigerant draws the heat energy of the outside air by the outdoor heat exchanger 17 of the outdoor unit 10.

In the heating operation, the above-described refrigerant circulation cycle is repeated to maintain desired temperature of the room in which the indoor unit 30 is placed.

[Current Control in Inverter Device 11]

The air conditioning unit 1 realizes control to prevent a current exceeding an allowable value from flowing through the harness included in the inverter device 11 during the above-described cooling operation and heating operation. As illustrated in FIG. 3A, by the control, the controller 40 acquires the current value I of the current flowing through the harness H to be measured and the potential difference Vab across the harness H that are respectively measured by the ammeter 21 and the voltmeter 23 as a measurement section provided in the harness H. The controller 40 serving as a control section performs the control with reference to the acquired current value I and the acquired potential difference Vab that are electrical characteristics.

It is assumed that a resistance value Rs at a surface temperature Ts and a change rate of the resistance value Rs when the surface temperature Ts is varied (resistance-temperature change rate) are known for the harness H.

The controller 40 estimates, from Ohm's law ($Vab = I \times Ra$), a resistance value Ra of the harness H in the operation state, with use of the measured current value I and the measured potential difference Vab.

The controller 40 estimates a current surface temperature Ta of the harness H, based on the estimated resistance value Ra of the harness H and known resistance-temperature change rate of the harness H.

As an example, an estimation expression of the surface temperature of the harness in a case where a conductor of the harness H is made of copper (Cu) is expressed by the following equation (1). Copper is an example of the conductor of the harness H, and other metal materials excellent in conductivity, for example, aluminum or an aluminum alloy may be used for the conductor of the harness H.

$$Ta\ (°C) = (234.5 + Ts) \times Ra/Rs - 234.5 \qquad \text{equation (1)}$$

where Ra is the estimated resistance value of the harness H, Rs is the resistance value (known) of the harness H at the temperature Ts, Ta is the estimated surface temperature of the harness H, and Ts is the surface temperature (known) of the harness in the resistance-temperature change rate.

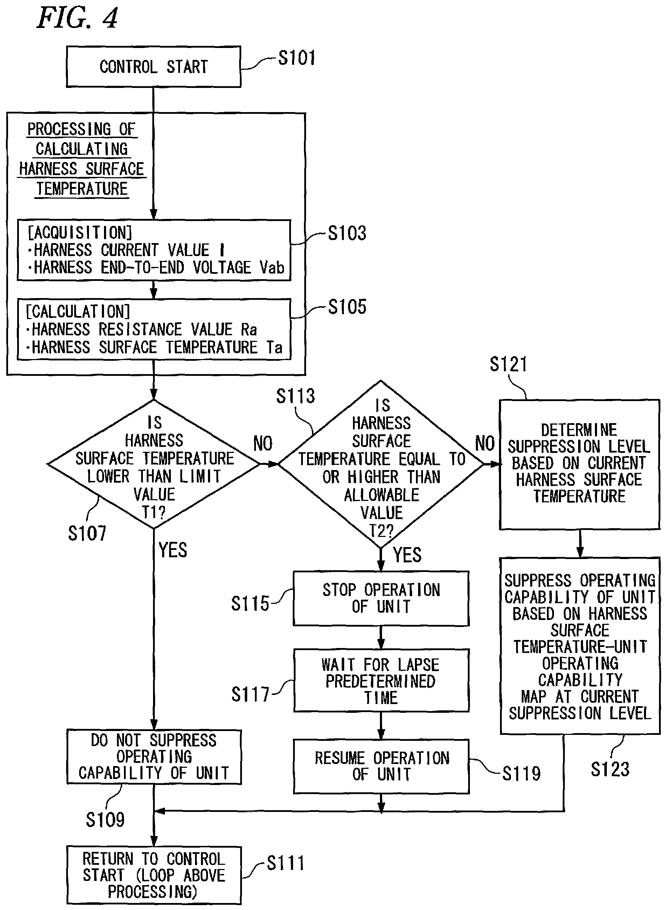

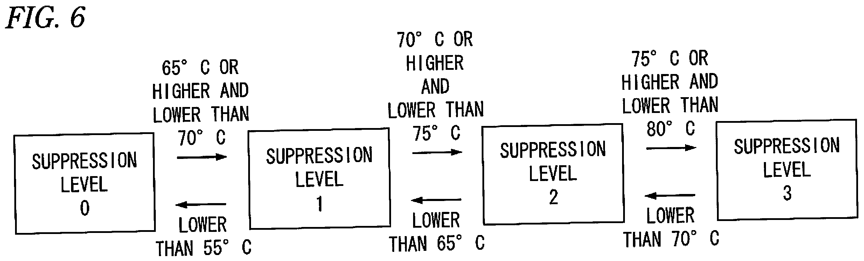

When the surface temperature Ta of the harness H estimated from the above-described equation (1) reaches the threshold Ts for the temperature, the controller 40 suppresses the operating capability of the air conditioning unit 1 and suppress the current flowing through the harness to the allowable current or lower. More specific control procedure is described with reference to FIG. 4 to FIG. 6. The suppression of the operating capability according to the present embodiment includes a mode of lowering the operating capability and a mode of stopping operation.

The controller 40 includes a limit value T1 and an allowable value T2 for the surface temperature of the harness H, and the limit value T1 and the allowable value T2 are each compared with the surface temperature Ta of the harness H determined from calculation. The limit value T1 is a threshold for determination whether to suppress the operating capability of the air conditioning unit 1. The allowable value T2 is a threshold for determination of a suppression degree of the operating capability of the air conditioning unit 1.

The controller 40 starts the control procedure at the same time when the operation of the air conditioning unit 1 is started (S101 in FIG. 4).

The controller 40 then acquires the current value I of the current flowing through the harness H and the potential difference Vab across the harness H respectively through the ammeter 21 and the voltmeter 23 (S103 in FIG. 4).

The controller 40 calculates, from Ohm's law, the resistance value Ra of the harness H with use of the acquired current value I and the acquired potential difference Vab (S105 in FIG. 4).

$$\texttt{Resistance value Ra = Potential difference}$$

$$\texttt{Vab/Current value I}$$

After the resistance value Ra is obtained, the controller 40 then calculates the surface temperature Ta of the harness H using the equation (1) (S105 in FIG. 4).

After the surface temperature Ta is calculated, the controller 40 compares the surface temperature Ta and the limit value T1 (S107 in FIG. 4). When the surface temperature Ta is lower than the limit value T1, the controller 40 determines that it is unnecessary to lower the temperature of the harness H (YES in S107 in FIG. 4), and continue the preceding control without controlling the operating capability of the air conditioning unit 1 (S109 in FIG. 4). The processing returns to the control START (S101 in FIG. 4), and the controller 40 performs the processing of calculating the harness surface temperature (S103 and S105 in FIG. 4) and subsequent procedure.

When the surface temperature Ta is equal to or higher than the limit value T1 (NO in step S107 in FIG. 4), the controller 40 then compares the surface temperature Ta and the allowable value T2 (S113 in FIG. 4) .

When the surface temperature Ta is equal to or higher than the allowable value T2, the controller 40 stops operation of the air conditioning unit 1 (S115 in FIG. 4). The gist of the processing is that the controller 40 instructs stop of power supply from the inverter device 11 to the motor compressor 15, thereby stopping the operation of the motor compressor 15. The energization to the harness H, the surface temperature Ta of which once becomes equal to or higher than the allowable value T2, is stopped to lower the surface temperature Ta of the harness H.

The controller 40 measures an elapsed time after instructing stop of the power supply. After a predetermined time has elapsed (S117 in FIG. 4), the controller 40 instructs the inverter device 11 to supply power for resuming the operation of the air conditioning unit 1 (S119 in FIG. 4). The predetermined time is determined in consideration of the fact that the surface temperature Ta of the harness H becomes lower than the limit value T1.

After the operation is resumed, the processing returns to the control START (S101 in FIG. 4), and the controller 40 performs the processing of calculating the harness surface temperature (S103 and S105 in FIG. 4) and subsequent procedure.

When the surface temperature Ta is lower than the allowable value T2, the controller 40 determines a suppression level of the operating capability of the air conditioning unit 1, based on the current surface temperature Ta (S121 in FIG. 4). The controller 40 suppresses the operating capability of the air conditioning unit 1, based on the determined suppression level (S123 in FIG. 4). The operating capability at this time is determined based on a map in which the surface temperature Ta of the harness H and the operating capability of the air conditioning unit 1 are associated with each other. Note that the determination of the suppression level of the operating capability, the map, and the suppression level of the operating capability are specifically described later.

After the operating capability is suppressed, the processing returns to the control START (S101 in FIG. 4), and the controller 40 performs the processing of calculating the harness surface temperature (S103 and S105 in FIG. 4) and subsequent procedure.

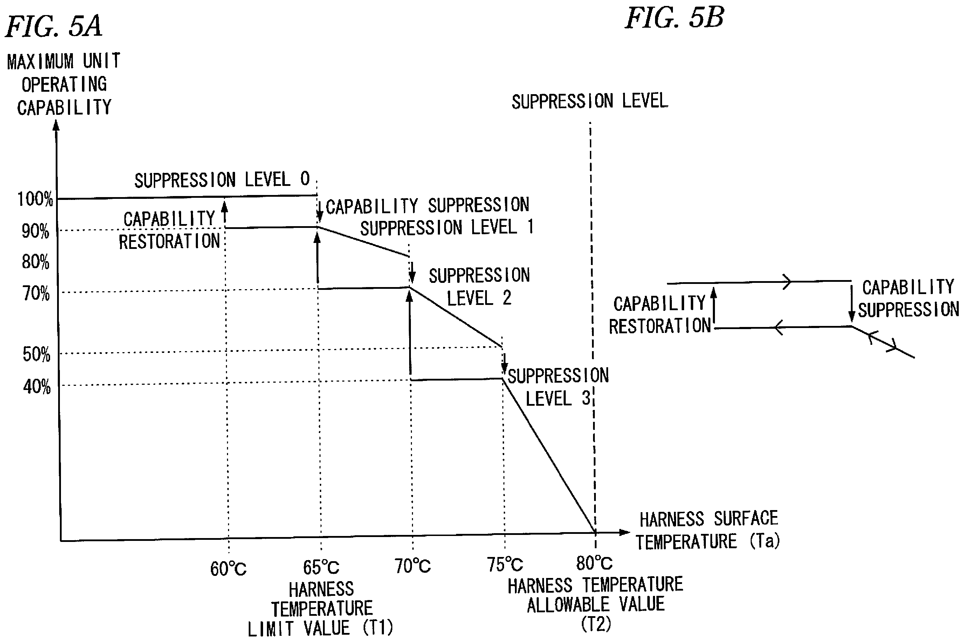

FIG. 5A illustrates the harness surface temperature-the maximum unit operating capability map (hereinafter, simply referred to as map) in which the surface temperature Ta of the harness H and the operating capability of the air conditioning unit 1 are associated with each other. The map is referred in the suppression of the operating capability.

In the map, a lateral axis indicates the surface temperature Ta of the harness H, and a vertical axis indicates the maximum unit operating capability. In the lateral axis, the limit value T1 and the allowable value T2 are illustrated. In FIG. 5A, the limit value T1 is set to 65°C, and the allowable value T2 is set to 80°C as an example. Temperature sections of the suppression level described later and the operating capability (%) are also set as an example, and specific values thereof do not limit the present invention.

As illustrated in FIG. 5A, the map defines that the operating capability of the air conditioning unit 1 is stepwisely lowered as the surface temperature Ta is increased. More specifically, in the map, four stages of a suppression level 0, a suppression level 1, a suppression level 2, and a suppression level 3 are set, and an inclination of the drawing is increased so that the operating capability is more suppressed as the surface temperature Ta approaches the allowable value T2. The inclination is formed in a linear shape; however, the inclination may be in a curved shape or a combination of a linear shape and a curved shape. Further, the four stages of the suppression level 0 to the suppression level 3 are an example in the present invention, and the number of stages of the suppression levels may be optionally set.

As illustrated in FIG. 4, FIG. 5A, FIG. 5B and FIG. 6, the suppression level 0 indicates a state in which the surface temperature Ta is lower than 65°C, and the air conditioning unit 1 is operated with the capability of 100% according to the instruction from the controller 40.

A range of the surface temperature Ta of 65°C or higher and lower than 70°C corresponds to the suppression level 1. The operating capability is suppressed to 90% when the surface temperature Ta is 65°C, and the operating capability is suppressed to 70% when the surface temperature Ta is 70°C. The operating capability according to the inclination is adopted at a temperature between 65°C and 70°C.

The suppression is similarly performed in the suppression level 2 and the suppression level 3. When the surface temperature Ta of the harness H exceeds the suppression level 3 and reaches the allowable value T2, the operation of the air conditioning unit 1 is stopped.

At the time of switching the suppression level, the controller 40 performs hysteresis operation in the capability suppression and in the capability restoration, as illustrated in FIG. 5B (YES in S113, and S115 in FIG. 4). In other words, when the harness H is lowered to predetermined temperature after the suppression of the operating capability is started, the controller 40 restores the operating capability. For example, when the temperature of the harness H becomes 70°C in FIG. 5B, the air conditioning unit 1 is operated with the capability of 70% until the surface temperature Ta of the harness H becomes 65°C, and then the operating capability is restored to 90%. This purpose is to reliably lower the temperature of the harness H.

[Effects of Embodiment]

Next, effects achieved by the air conditioning unit 1 are described.

In the air conditioning unit 1, the controller 40 determines the surface temperature Ta of the harness H with use of the current value I of the current flowing through the harness H and the potential difference Vab across the harness H, and compare the surface temperature Ta with the limit value T1. The controller 40 suppresses operating capability of the air conditioning unit 1 based on a result of the comparison, so that the temperature of the harness H can be lowered. In addition, meters such as the ammeter and the voltmeter are only necessary for the air conditioning unit 1, which enables an excess current to be prevented from flowing through the harness H without adding, to the circuit configuring the inverter device 11, a transistor that is an element complicating the circuit.

Further, the air conditioning unit 1 uses the allowable value T2 in addition to the limit value T1 that is used for determination whether to suppress the operating capability of the air conditioning unit 1. In addition, the plurality of suppression levels is provided between the limit value T1 and the allowable value T2, which allows for selection of the operating capability of the air conditioning unit 1 according to the surface temperature Ta of the harness H. In addition, when the surface temperature Ta becomes equal to or higher than the allowable value T2, the operation of the air conditioning unit 1 is stopped. According to the air conditioning unit 1, an excess current can be prevented from flowing through the harness H by selecting, based on the surface temperature Ta, the suppression degree of the operating capability including stoppage.

Other than the above, the configurations described in the above-described embodiment may be selected or appropriately modified without departing from the scope of the present invention.

For example, in the above-described embodiment, the example in which the current value I and the potential difference Vab of the harness H are measured to estimate the surface temperature Ta has been described. Alternatively, in the present invention, only the potential difference Vab may be acquired to suppress the operating capability of the air conditioning unit 1. For example, the potential difference Vab across the harness H and a predetermined threshold Vs for the potential difference are compared. When the potential difference Vab reaches the threshold Vs, it is determined that one or both of the current value I of the current flowing through the harness H and the surface temperature Ta of the harness H reach respective limit values. The operating capability of the air conditioning unit is suppressed based on the determination, to suppress the current flowing through the harness H.

According to the above-described example, an ammeter can be omitted. This allows a lower cost to be achieved as compared with the above-described embodiment.

The example is also based on Ohm's law (potential difference Vab = current value I × resistance value Ra). In other words, in Ohm's law, when the current value I is increased, the potential difference Vab is increased in proportion thereto. Therefore, the potential difference Vab and the threshold Vs are compared. Likewise, when the temperature of the harness H is increased, the resistance value Ra of the conductor of the harness H is increased, and the potential difference Vab is also increased in association therewith. Therefore, the potential difference Vab and the threshold Vs are compared.

Further, in the above-described embodiment, the surface temperature Ta is estimated for one harness H. In the present invention, however, an optional number of harnesses H among all of the harnesses H configuring the electrical circuit may be handled as estimation targets. In the case where one or more of all of the harnesses H are handled as the estimation targets, the harness H, the temperature of which may become highest, is preferably selected. This can prevent an excess current from flowing through the harnesses H that are not handled as the estimation targets.

In the above-described embodiment, the operating capability of the air conditioning unit 1 is controlled with use of two thresholds of the limit value T1 and the allowable value T2. In the present invention, however, the operating capability may be controlled with use of one threshold. For example, when the surface temperature Ta becomes equal to or higher than the threshold Vs, the operating capability may be largely evenly suppressed.

**Claims**

1. A current controller configured to control a current to be supplied to a wire harness (H) configuring an electrical apparatus, the current controller comprising:

   a measurement section (21, 23) configured to measure electrical characteristics of the wire harness (H) that are varied according to a supplied current; and
   a control section (40) configured to suppress the current to be supplied to the wire harness (H), based on the electrical characteristics measured by the measurement section (21, 23).

2. The current controller according to claim 1, wherein the control section (40) is configured to estimate a surface temperature Ta of a conductor of the wire harness (H) based on a current value I of the wire harness (H) and a potential difference Vab across the wire harness (H) that are measured by the measurement section (21, 23), to compare the estimated surface temperature Ta with a predetermined threshold Ts for temperature, and to suppress the current to be supplied to the wire harness (H) based on a result of the comparison between the surface temperature Ta and the threshold Ts.

3. The current controller according to claim 2, wherein
   the control section (40) includes, as the threshold Ts, a limit value T1 and an allowable value T2 that is a temperature higher than the limit value T1, and
   the control section (40) is configured to compare the estimated surface temperature Ta with the limit value T1 to determine whether to suppress the current to be supplied to the wire harness (H), and
   is configured to compare the estimated surface temperature Ta with the allowable value T2 to determine whether to stop the supply of the current to the wire harness (H).

4. The current controller according to claim 3, wherein the control section (40) is configured to suppress the current to be supplied to the wire harness (H) when the estimated surface temperature Ta is a value between the limit value T1 and the allowable value T2.

5. The current controller according to claim 4, wherein the control section (40) is configured to specify a suppression degree of the current to be supplied to the wire harness (H) based on a degree of the estimated surface temperature Ta.

6. The current controller according to any one of claims 1 to 5, wherein the control section (40) is configured to compare a potential difference Vab across the wire harness (H) measured by the measurement section with a predetermined threshold Vs for potential difference, and to suppress the current to be supplied to the wire harness (H) based on a result of the comparison between the potential difference Vab and the threshold Vs.

7. The current controller according to any one of claims 1 to 6, wherein the control section (40) is configured to restore the suppressed current to be supplied to the wire harness (H) when a predetermined condition is satisfied.

8. The current controller according to claim 7, wherein the control section (40) is configured to restore the current in a manner following history of hysteresis after suppressing the current to be supplied to the wire harness (H).

9. An electrical apparatus, comprising:

an inverter device (11) including a wire harness (H) as an element and configured to be supplied with AC power from a power supply (50);
a load (15) configured to be operated by power generated by the inverter device (11);
a measurement section (21, 23) configured to measure electrical characteristics of the wire harness (H) that are varied according to a supplied current; and
a control section (40) configured to control operating capability of the load (15), wherein
the control section (40) is configured to suppress the operating capability of the load (15) based on the electrical characteristics measured by the measurement section (21,23), to suppress the current to be supplied to the wire harness (H).

10. The electrical apparatus according to claim 9, wherein
the electrical apparatus is an air conditioning unit (1), and
the load is a motor compressor (15).

*FIG. 1A*

1
30    10

INDOOR UNIT    OUTDOOR UNIT

EXPANSION
VALVE

19

INDOOR HEAT EXCHANGER

17    OUTDOOR HEAT EXCHANGER

31

15

COMPRESSOR

INVERTER

CONTROLLER

40    11    50

*FIG. 1B*

SMOOTHING
11
AC TO DC    DC TO AC

CONVERTER CIRCUIT

INVERTER CIRCUIT

12    13    14

*FIG. 2A*

*FIG. 2B*

FIG. 3A

Va    21    H                                    Vb

→
CURRENT VALUE I

23 (Vab)

FIG. 3B

H
Va                                               Vb

→
CURRENT VALUE I

23 (Vab)

## FIG. 4

```
┌──────────────────────┐
│    CONTROL START     │──S101
└──────────────────────┘
            │
┌──────────────────────────────────┐
│  PROCESSING OF                    │
│  CALCULATING                      │
│  HARNESS SURFACE                  │
│  TEMPERATURE                      │
│                                   │
│  ┌─────────────────────────┐      │──S103
│  │ [ACQUISITION]           │      │
│  │ ·HARNESS CURRENT VALUE I│      │
│  │ ·HARNESS END-TO-END     │      │
│  │  VOLTAGE Vab            │      │
│  └─────────────────────────┘      │
│  ┌─────────────────────────┐──S105│
│  │ [CALCULATION]           │      │
│  │ ·HARNESS RESISTANCE     │      │
│  │  VALUE Ra              │      │
│  │ ·HARNESS SURFACE        │      │
│  │  TEMPERATURE Ta        │      │
│  └─────────────────────────┘      │
└──────────────────────────────────┘
            │
         S113                           S121
          ◇                              │
  IS              NO    IS         NO  ┌─────────────────┐
HARNESS      ─────── HARNESS    ────── │ DETERMINE       │
SURFACE TEMPERATURE   SURFACE          │ SUPPRESSION     │
LOWER THAN LIMIT   TEMPERATURE EQUAL   │ LEVEL BASED ON  │
VALUE T1?          TO OR HIGHER THAN   │ CURRENT HARNESS │
   S107            ALLOWABLE VALUE T2? │ SURFACE         │
    │ YES              │ YES           │ TEMPERATURE     │
    │            ┌──────────────┐      └─────────────────┘
    │            │ STOP OPERATION│──S115        │
    │            │ OF UNIT       │      ┌─────────────────┐
    │            └──────────────┘      │ SUPPRESS        │
    │                   │              │ OPERATING       │
    │            ┌──────────────┐      │ CAPABILITY OF   │
    │            │ WAIT FOR LAPSE│     │ UNIT BASED ON   │
    │       S117─│ PREDETERMINED │     │ HARNESS SURFACE │
┌───────────┐   │ TIME          │     │ TEMPERATURE-UNIT│
│ DO NOT    │   └──────────────┘      │ OPERATING       │
│ SUPPRESS  │          │              │ CAPABILITY      │
│ OPERATING │   ┌──────────────┐      │ MAP AT CURRENT  │
│ CAPABILITY│   │ RESUME        │     │ SUPPRESSION     │
│ OF UNIT   │   │ OPERATION     │──S119│ LEVEL           │
└───────────┘   │ OF UNIT       │     └─────────────────┘
   S109         └──────────────┘           S123
    │                  │
┌──────────────────────┐
│ RETURN TO CONTROL    │──S111
│ START (LOOP ABOVE    │
│ PROCESSING)          │
└──────────────────────┘
```

FIG. 5A

FIG. 5B

EP 3 457 509 A1

*FIG. 6*

```
                  65° C OR              70° C OR                 75° C OR
                  HIGHER AND            HIGHER                   HIGHER AND
                  LOWER THAN            AND                      LOWER THAN
                  70° C                 LOWER THAN               80° C
┌──────────────┐    ──→   ┌──────────────┐   75° C   ┌──────────────┐   ──→   ┌──────────────┐
│ SUPPRESSION  │          │ SUPPRESSION  │    ──→    │ SUPPRESSION  │          │ SUPPRESSION  │
│   LEVEL      │          │   LEVEL      │           │   LEVEL      │          │   LEVEL      │
│     0        │   ←──    │     1        │    ←──    │     2        │   ←──    │     3        │
└──────────────┘  LOWER   └──────────────┘   LOWER   └──────────────┘  LOWER   └──────────────┘
                 THAN 55° C                 THAN 65° C                THAN 70° C
```

Europäisches
Patentamt

European
Patent Office

Office européen
des brevets

# EUROPEAN SEARCH REPORT

Application Number

EP 18 19 4639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 735 058 A (UMEZU KENJI [JP] ET AL) 5 April 1988 (1988-04-05) | 1-3,5-10 | INV. H02H3/08 |
| A | * figures 1-2 * <br> * figure 25 * <br> * figure 35 * <br> * column 1, line 6 * <br> * column 1, line 18 * <br> * column 1, line 26 - line 30 * <br> * column 3, line 3 - line 18 * <br> * column 3, line 35 - line 37 * <br> ----- | 4 | F25B13/00 F25B49/02 H02H5/04 H02H7/22 |
| X | JP S59 132779 A (TOSHIBA KK) 30 July 1984 (1984-07-30) | 1,9 | |
| A | * abstract * <br> * column 1, line 6 * <br> * column 3, line 15 * <br> ----- | 2-8,10 | |
| A | US 2010/082160 A1 (KONDOU NAOSHI [JP] ET AL) 1 April 2010 (2010-04-01) <br> * abstract * <br> * paragraph [0031] * <br> ----- | 1-10 | |

| TECHNICAL FIELDS SEARCHED (IPC) |
|---|
| H02H F25B |

The present search report has been drawn up for all claims

| Place of search | Date of completion of the search | Examiner |
|---|---|---|
| Munich | 15 January 2019 | Operti, Antonio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 4639

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2019

| Patent document cited in search report | | Publication date | Patent family member(s) | | Publication date |
|---|---|---|---|---|---|
| US 4735058 | A | 05-04-1988 | IT | 1228533 B | 20-06-1991 |
| | | | JP | S6332255 A | 10-02-1988 |
| | | | KR | 900003871 B1 | 02-06-1990 |
| | | | US | 4735058 A | 05-04-1988 |
| JP S59132779 | A | 30-07-1984 | NONE | | |
| US 2010082160 | A1 | 01-04-2010 | CN | 101611274 A | 23-12-2009 |
| | | | EP | 2116796 A1 | 11-11-2009 |
| | | | KR | 20100004965 A | 13-01-2010 |
| | | | US | 2010082160 A1 | 01-04-2010 |
| | | | WO | 2008105055 A1 | 04-09-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014184878 A